# EUROPÄISCHE PATENTSCHRIFT

(11) **EP 1 971 206 B1**
(45) Veröffentlichungstag und Bekanntmachung des Hinweises auf die Patenterteilung: **13.01.2010**
(21) Anmeldenummer: 06819737.5
(22) Anmeldetag: 24.11.2006
(51) Int. Cl.: A01N 25/34, A01N 59/16, B05D 7/00, A01P 3/00, A01P 1/00

(54) **SUBSTRATE MIT BIOZIDEN UND/ODER ANTIMIKROBIELLEN EIGENSCHAFTEN**
SUBSTRATES HAVING BIOCIDAL AND/OR ANTIMICROBIAL PROPERTIES
SUBSTRATS AYANT DES PROPRIÉTÉS BIOCIDES ET/OU ANTIMICROBIENNES

(30) Priorität: 11.01.2006 DE 102006001641
(43) Veröffentlichungstag der Anmeldung: 24.09.2008
(73) Patentinhaber: Evonik Degussa GmbH, 45128 Essen (DE)
(72) Erfinder: NUN, Edwin, 48727 Billerbeck (DE); BERGANDT, Heike, 45772 Marl (DE); GUTSCH, Andreas, 59348 Lüdinghausen (DE)
(86) Internationale Anmeldenummer: PCT/EP2006/068868
(87) Internationale Veröffentlichungsnummer: WO 2007/093239

(56) Entgegenhaltungen:
- WO-A-98/51747
- WO-A-2005/080684
- DATABASE WPI Week 200007 Derwent Publications Ltd., London, GB; AN 2000-076151 XP002483958 & JP 11 323796 A (NIPPON KENKYUSHO KK) 26. November 1999 (1999-11-26) in der Anmeldung erwähnt -& DATABASE EPODOC EUROPEAN PATENT OFFICE, THE HAGUE, NL; XP002483986 & JP 11 323796 A 26. November 1999 (1999-11-26)

## Beschreibung

Der Gegenstand der vorliegenden Anmeldung betrifft ein Verfahren zur Beschichtung von Substraten mit bioziden Eigenschaften, sowie Substrate erhältlich nach dem vorgenannten Verfahren.

Es besteht in der Technik ein Bedarf, das Wachstum von Mikroben oder Pilzen auf Belägen, insbesondere auf Wandbelägen, wie z.B. Tapeten, zu vermindern. Falls eine mit einer Tapete versehene Wand von Schimmel befallen wird, wird in der Regel aufgrund der Sichtbarkeit des Schimmels sehr schnell reagiert. Bei Schimmel handelt es sich um Pilze, die zunächst oberflächlich und später auch in die Tiefe gehend die Wand oder andere Materialen besiedeln. Stockflecken sind einzelne, meist runde Kolonien der Pilze, die aus einer einzigen Spore ausgekeimt sind. Pilzforscher unterscheiden cirka. 10.000 Schimmelpilzarten, von denen aber nur wenige in Wohnräumen vorgefunden werden. Falls eine Wand von Schimmel befallen wird, rührt dieser Befall im Regelfall nicht von einer einzigen Pilzspezies her, sondern vielmehr wird eine solche Wand von verschiedenen Arten besiedelt, wobei Aspergillus- und Penicilliumarten am häufigsten auftreten.

Pilze besitzen im Gegensatz zu Pflanzen kein Chlorophyll und sind daher nicht in der Lage, ihre Energie aus dem Sonnenlicht zu gewinnen. Als Energiequelle für Pilze im Wohnbereich dienen Holz- und Holzbestandteile, Wandfarben und Gipsputz, Blumentopferde bzw. abgestorbene Teile von Zimmerpflanzen sowie Lebensmittel.

Pilze benötigen Wasser zum wachsen. Fehlt das Wasser, stirbt der Pilz jedoch nicht sofort ab, sondern er bildet sogenannte Dauerzellen aus. Diese Dauerzellen ermöglichen es dem Pilz Notzeiten und insbesondere Zeiten, in denen nicht ausreichend Wasser zur Verfügung steht, zu überstehen. Bei erneut günstigen Wachstumsbedingungen, also z.B. wieder erneut ausreichend feuchten Bedingungen wächst der Pilz sodann, wenn die "Notzeit" nicht lang genug war, um den Pilz vollständig abzutöten. Nachfolgend verbreitet und vermehrt sich der Pilz über Sporen und Konidien sehr schnell. Die Sporen und Konidien werden in sehr großer Zahl produziert und in der Luft schwebend verbreitet. Sie sind für das menschliche Auge nicht sichtbar und ihr Durchmesser liegt durchschnittlich zwischen 0,002 und 0,006 mm. Zu einer Auskeimung und zum Pilzwachstum kommt es jedoch nur, wenn für die jeweilige Pilzart günstige Wachstumsbedingungen vorliegen. Feuchte Wände beispielsweise stellen einen idealen Lebensraum und Nährböden für solche Pilze im Allgemeinen dar.

Schimmelpilze benötigen zum Wachstum eine Temperatur von cirka 20 °C und eine Luftfeuchtigkeit von über 70 %. Beispiele hierfür sind in der Wohnung entstehende Luftfeuchtigkeit durch Kochen, Geschirrspülen, Baden, Duschen, Waschen, Wäschetrocknen oder durch Zimmerpflanzen und Verdunstung.

Es ist somit von größtem wirtschaftlichem Interesse, die Folgen eines Schimmelpilzbefalles zu reduzieren. Insbesondere soll das Auftreten von Verfärbungen an befallenen Stellen durch die sogenannten "Stockflecken" vermieden werden. Wenn eine solche Ausbreitung eines Schimmelpilzes nicht rechzeitig gestoppt wird, so werden Wandbeläge, wie z.B. Tapeten, zersetzt, Holz oder Papier verfällt und Putz und Farben blättern ab.

Keramische Fliesen bieten den Schimmelpilzen aufgrund der undurchdringlichen Oberfläche einen schlechten Nährgrund. Allerdings haben solche keramischen Fliesen den Nachteil, das sie sehr spröde sind und somit nur bedingt zur Verkleidung von Wänden geeignet sind. Bei symmetrisch sehr anspruchsvollen Oberflächen in Räumen müssen die Fliesen aufwändig in entsprechende Formen zerteilt werden um dann auf eine Wand aufgebracht zu werden.

Des Weiteren ist es bekannt, dass die Verwendung von z.B. Silber- oder Zinnorganylen das Wachstum von Pilzen jeglicher Art unterbindet. Hierbei sind im Stand der Technik die unterschiedlichsten Verfahren bekannt, solche biozid und antimikrobiell wirksamen Substanzen auf die unterschiedlichsten Substrate aufzubringen.

Allerdings muss das Substrat, auf dem eine solche antimikrobielle bzw. biozide Beschichtung aufgebracht wird, den Reaktionsbedingungen des Aufbringens der Substanzen standhalten. Da im Regelfall für die Aufbringung von z.B. Silber auf Substraten eine erhöhte Temperatur notwendig ist, können solche Verfahren des Standes der Technik nicht für z.B. Tapeten verwendet werden, die aus einem relativ temperaturlabilen Substrat bestehen, wie zum Beispiel Papier.

Andererseits wird im Stand der Technik in z.B. der japanischen Offenlegungsschrift 11-323796 beschrieben, dass eine Tapete mit antimikrobiellen Eigenschaften erhalten werden kann, wenn silberhaltiger Zeolith aufgebracht wird. Nachteilig bei diesem Verfahren ist allerdings, dass der Zeolith, Welcher mit Silber beaufschlagt wurde, nur sehr kostenintensiv hergestellt werden kann.

Die technische Aufgabe der vorliegenden Erfindung ist die Überwindung der Nachteile des Standes der Technik und insbesondere soll ein Verfahren zur Herstellung eines antimikrobiell und biozid ausgerüsteten Materials, sowie dieses Material selbst zur Verfügung gestellt werden, bei dem der Anteil an antimikrobieller und biozider Substanz vermindert wird, wobei die Wirksamkeit verbessert wird und als Substrate vorteilhafterweise flexible Substrate verwendet werden können.

Die technische Aufgabe der vorliegenden Erfindung wird gelöst durch ein Verfahren zur Beschichtung von Substraten, umfassend die Schritte:
a) Bereitstellung eines Substrates,
b) Aufbringung einer Zusammensetzung auf mindestens einer Seite des Substrates, wobei die Zusammensetzung eine anorganische Verbindung,
   ausgewählt aus TiO₂, Al₂O₃, SiO₂, ZrO₂, Y₂O₃, BC, SiC, Fe₂O₃, SiN, SiP, Alumosilicaten, Aluminiumphosphaten, Zeolithen, partiell ausgetauschten Zeolithen oder Mischungen derselben,
   enthält,
c) Trocknen der in Schritt b) aufgebrachten Zusammensetzung,
d) Aufbringung mindestens einer Beschichtung auf der mindestens einen Seite des Substrates, auf der in Schritt b) die Zusammensetzung aufgebracht wurde, wobei in der Beschichtung
   als Silan
      3-Glycidyloxypropyltriethoxysilan und/oder
      3-Glycidyloxypropyltrimethoxysüan und/oder
   als zweites Silan
      3-Aminopropyltrimethoxysilan und/oder
      3-Aminopropyltriethoxysilan und/oder
      N-2-Aminoethyl-3-aminopropyltrimethoxysilan,
      oder
   als Silan
      Tetraethoxysilan, Methyltriethoxysilan, Octyltriethoxysilan und/oder Hexadecyltrimethoxysilan und/oder
   als zweites Silan
      3,3,4,4,5,5,6,6,7,7,8,8,8- Tridecafluoroctyltriethoxysilan
   enthalten ist,
   und
   Oxidpartikel,
      ausgewählt aus den Oxiden von Ti, Si, Zr, Al, Y, Sn, Zn, Ce oder Mischungen derselben,
   einen Initiator, und
      Zink, Zink-Salze, Zink-Komplexe, Silber, Silber-Salze und/oder komplexiertes Silber
   enthält, und
e) Trocknen der in Schritt d) aufgebrachten Beschichtung,
f) Aufbringung mindestens einer weiteren Beschichtung auf der mindestens einen Seite des Substrates, auf der in Schritt d) die Beschichtung aufgebracht wurde, wobei die weitere Beschichtung
   als Silan
      3-Glycidyloxypropyltriethoxysilan und/oder
      3-Glycidyloxypropyltrimethoxysilan und/oder
   als zweites Silan
      3-Aminopropyltrimethoxysilan und/oder
      3-Aminopropyltriethoxysilan und/oder
      N-2-Aminoethyl-3-aminopropyltrimethoxysilan,
      oder
   als Silan
      Tetraethoxysilan, Methyltriethoxysilan, Octyltriethoxysilan und/oder Hexadecyltrimethoxysilan und/oder
   als zweites Silan
      3,3,4,4,5,5,6,6,7,7,8,8,8-Tridecafluoroctyltriethoxysilan,
      und
   eine antimikrobielle und/oder biozide Substanz, ausgewählt aus Substanzen enthaltend,
      Zn, Zn-Salze, Zn-Komplexe wie z.B. Zinkacetylacetonat, Zr, Ag, Ag-Salze, Ag-Komplexe, Sn, Sn-Verbindungen, oder Mischungen derselben, und
   einen Initiator enthält,
g) Trocknen der in Schritt f) aufgebrachten weiteren Beschichtung.

Das Verfahren der vorliegenden Erfindung ist auf keine spezifischen Substrate limitiert. Die Substrate können sowohl offenporig als auch geschlossenporig sein. Das Substrat in Schritt a) kann vorzugsweise ein flexibles und/oder starres Substrat sein. In einer bevorzugten Ausführungsform ist das Substrat in Schritt a) ein Gewirke, ein Gewebe, ein Geflecht, eine Folie, ein Flächengebilde, ein Vlies und/oder ein Blech. Es ist auch bevorzugt, dass das Substrat ein Papiersubstrat ist.

Vorzugsweise ist das Substrat in Schritt a) bei einer Temperatur größer als 100 °C im Wesentlichen temperaturstabil. In einer weiter bevorzugten Ausführungsform ist das Substrat in Schritt a) unter den Trocknungsbedingungen der Schritt c), e) und/oder g) im Wesentlichen temperaturstabil. Unter wesentlich temperaturstabil wird verstanden, dass sich die Struktur des Substrates im Wesentlichen nicht ändert und somit für den gewünschten Einsatzzweck verwendet werden kann.

Die anorganische Verbindung des Schrittes b) ist ausgewählt aus TiO₂, Al₂O₃, SiO₂, ZrO₂, Y₂O₃, BC, SiC, Fe₂O₃, SiN, SiP, Alumosilicaten, Aluminiumphosphaten, Zeolithen, partiell ausgetauschten Zeolithen oder Mischungen derselben. Bevorzugte Zeolithe sind z.B. ZSM-5, Na-ZSM-5 oder Fe-ZSM-5 oder amorphe mikroporöse Mischoxide, die bis zu 20 Prozent nicht hydrolysierbare organische Verbindungen enthalten können, wie z.B. Vanadinoxid-Siliciumoxid-Glas oder Aluminiumoxid-Siliciumoxid-Methylsiliciumsesquioxid-Gläser.

Vorzugsweise weist die anorganische Verbindung des Schrittes b) eine Korngröße von 1 nm bis 10.000 nm auf, weiter bevorzugt von 5 nm bis 5.000 nm, vorzugsweise von 10 nm bis 2.000 nm, in einer weiter bevorzugten Ausführungsform von 10 nm bis 1.000 nm, vorzugsweise von 15 nm bis 700 nm und am meisten bevorzugt von 20 nm bis 500 nm.

Es kann vorteilhaft sein, wenn der erfindungsgemäße Verbundwerkstoff zumindest zwei Korngrößenfraktionen der zumindest einen anorganischen Verbindung aufweist. Ebenso kann es vorteilhaft sein, wenn das erfindungsgemäß Substrat zumindest zwei Korngrößenfraktionen von zumindest zwei anorganischen Verbindungen aufweist. Das Korngrößenverhältnis kann von 1:1 bis 1:10.000, vorzugsweise von 1:1 bis 1:100 betragen. Das Mengenverhältnis der Korngrößenfraktionen in der Zusammensetzung des Schrittes b) kann vorzugsweise von 0,01:1 bis 1:0,01 betragen.

Die Zusammensetzung des Schrittes b) ist vorzugsweise eine Suspension, die vorzugsweise eine wässrige Suspension ist. Die Suspension kann vorzugsweise eine Flüssigkeit, ausgewählt aus Wasser, Alkohol, Säure oder eine Mischung derselben aufweisen.

Die anorganische Verbindung des Schrittes b) wird vorzugsweise durch Hydrolysieren einer Vorstufe der anorganischen Verbindung enthaltend das Metall und/oder Halbmetall erhalten. Das Hydrolysieren kann z.B. durch Wasser und/oder Alkohol erfolgen.

Die Vorstufe der anorganischen Verbindung ist vorzugsweise ausgewählt aus Metallnitrat, Metallhalogenid, Metallcarbonat, Metallalkoholat, Metall-Acetylacetonate, Halbmetallhalogenid, Halbmetallalkoholat oder Mischung derselben. Bevorzugte Vorstufen sind z.B. Titanalkoholate, wie z.B. Titanisopropylat, Siliciumalkoholate, wie z.B. Tetraethoxysilan, Zirkoniumalkoholate. Bevorzugte Metallnitrate sind z.B. Zirkoniumnitrat. In einer vorteilhaften Ausführungsform ist in der Zusammensetzung in Bezug auf die hydrolysierbare Vorstufe, bezogen auf die hydrolysierbare Gruppe der Vorstufe, zumindest das halbe Molverhältnis Wasser, Wasserdampf oder Eis, enthalten.

In der Zusammensetzung des Schrittes b) ist vorzugsweise ein Initiator enthalten, der vorzugsweise die anorganische Vorstufe hydrolysiert. Der Initiator kann vorzugsweise auch eine Säure oder Base sein, wobei eine wässrige Säure oder Base weiter bevorzugt ist. Außerdem kann die Zusammensetzung des Schrittes b) ein Sol sein.

In einer bevorzugten Ausführungsform ist die Zusammensetzung des Schrittes b) ein Sol. In einer bevorzugten Ausführungsform ist es möglich handelsübliche Sole, wie z.B. Titannitratsol, Zirkonnitratsol oder Silicasol, zu verwenden.

Das Trocknen der Zusammensetzung in Schritt c) wird vorzugsweise durch Erwärmen auf eine Temperatur zwischen 50 °C und 1.000 °C durchgeführt. In einer bevorzugten Ausführungsform wird für 1 Minute bis 2 Stunden bei einer Temperatur von 50 °C bis 100 °C getrocknet.

In einer anderen bevorzugten Ausführungsform wird in Schritt c) für 1 Sekunde bis 10 Minuten bei einer Temperatur von 100 °C bis 800 °C getrocknet.

Das Trocknen des Schrittes c) kann mittels erwärmter Luft, Heißluft, Infrarotstrahlung, Mikrowellenstrahlung oder elektrisch erzeugter Wärme erfolgen.

In der Beschichtung d) und/oder f) ist 3-Glycidyloxypropyltriethoxysilan und/oder 3-Glycidyloxypropyltrimethoxysilan als Silan und/oder 3-Aminopropyltrimethoxysilan und/oder 3-Aminopropyltriethoxysilan und/oder N-2-Aminoethyl-3-aminopropyltrimethoxysilan (DAMO) als zweites Silan enthalten, oder Tetraethoxysilan, Methyltriethoxysilan, Octyltriethoxysilan und/oder Hexadecyltrimethoxysilan als Silan und/oder 3,3,4,4,5,5,6,6,7,7,8,8,8-Tridecafluoroctyltriethoxysilan als zweites Silan.

Es ist bevorzugt, dass die Beschichtung des Schrittes d) und/oder f) als Initiator eine Säure oder Base, welche vorzugsweise eine wässrige Säure oder Base ist.

Außerdem kann die Oberfläche der Oxidpartikel, enthaltend in der Beschichtung des Schrittes d) hydrophob sein. An der Oberfläche der Oxidpartikel der Beschichtung des Schrittes d) sind vorzugsweise an Siliciumatome gebundene organische Reste X₁₊₂ₙCₙ vorhanden, wobei n 1 bis 20 ist und X Wasserstoff und/oder Fluor ist. Die organischen Reste können gleich oder unterschiedlich sein. Vorzugsweise ist n 1, 2, 3, 4, 5, 6, 7, 8, 9, 10, 11, 12, 13, 14, 15, 16, 17, 18, 19 und/oder 20. Vorzugsweise sind die an Siliziumatome gebundenen Gruppen Methyl-, Ethyl-, Propyl-, Butyl-, Pentylgruppen. und/oder Oktylgruppen. In einer besonders bevorzugten Ausführungsform sind Trimethylsilylgruppen an die Oberfläche der Oxidpartikel gebunden. Die organischen Reste können vorzugsweise abgespalten werden und weiter bevorzugt hydrolysiert werden.

Die Oxidpartikel der Beschichtung des Schrittes d) sind ausgewählt aus den Oxiden von Ti, Si, Zr, Al, Y, Sn, Zn, Ce oder Mischungen derselben enthalten. Vorzugsweise werden die Oxidpartikel der Beschichtung des Schrittes d) unter den Reaktionsbedingungen des Schrittes d) an der Oberfläche der Oxidpartikel teilweise hydrolysiert. Hierbei bilden sich vorzugsweise reaktive Zentren, die mit den organischen Siliciumverbindungen der Beschichtung des Schrittes d) reagieren. Diese organischen Siliciumverbindungen können während der Trocknung des Schrittes e) und/oder g) kovalent an die Oxidpartikel durch z.B. -O-Bindungen gebunden werden. Es werden hierdurch die Oxidpartikel mit der aushärtenden Beschichtung kovalent vernetzt. Deshalb kann die Schichtdicke der aushärtenden Beschichtung überraschenderweise weiter gesteigert werden.

Die Oxidpartikel können eine mittlere Partikelgröße von 10 bis 1.000 nm, vorzugsweise von 20 bis 500 nm, weiter bevorzugt von 30 bis 250 nm aufweisen. Falls die Beschichtung transparent und/oder farblos sein soll, so werden vorzugsweise nur Oxidpartikel verwendet, die eine mittlere Partikelgröße von 10 bis 250 nm aufweisen. Die mittlere Partikelgröße bezieht sich auf die Partikelgröße der Primärpartikel oder, falls die Oxide als Agglomerate vorliegen, auf die Größe der Agglomerate. Die Partikelgröße wird durch lichtstreuende Methoden bestimmt, beispielsweise durch ein Gerät des Typs HORIBA LB 550^{®} (der Firma Retsch Technology).

Als weiteren Bestandteil kann die Beschichtung des Schrittes d) und/oder f) ein Polymer enthalten, welches vorzugsweise ein massenmittleres Molekulargewicht von mindestens 3.000 g/Mol aufweist. Vorzugsweise ist das mittlere massenmittlere Molekulargewicht mindestens 5000 g/Mol, weiter bevorzugt mindestens 6000 g/Mol und am meisten bevorzugt mindestens 10000 g/Mol.

Vorzugsweise weist das Polymer, enthalten in der Beschichtung des Schrittes d) und/oder f), einen mittleren Polymerisationsgrad von mindestens 50 auf. In einer weiter bevorzugten Ausführungsform ist der mittlere Polymerisationsgrad mindestens 80 , weiter bevorzugt mindestens 95 und am meisten bevorzugt mindestens 150. Das Polymer der Beschichtung des Schrittes d) und/oder f) kann ausgewählt werden aus Polyamid, Polyester, Epoxidharz, Melamin-Formaldehyd-Kondensat, Urethan-Polyol-Harz oder Mischungen derselben.

Es ist bevorzugt, das in Schritt d) auf das Substrat soviel der Beschichtung aufgebracht wird, dass nach Trocknung in Schritt e) auf dem Substrat eine Schicht der getrockneten jeweiligen Beschichtung mit einer Schichtdicke von 0,05 bis 10 µm vorhanden ist. Vorzugsweise ist auf dem getrockneten Substrat eine Beschichtung des Schrittes d mit einer Schichtdicke von 0,1 µm bis 9 µm, weiter bevorzugt von 0,2 µm bis 8 µm und am meisten bevorzugt von 0,3 µm bis 7 µm vorhanden.

Vorzugsweise kann vor dem Aufbringen der Beschichtung in Schritt b), d) und/oder f) mindestens eine zusätzliche Beschichtung aufgebracht werden.

Alternativ ist es möglich, dass nach dem Aufbringen der Beschichtung in Schritt b), d) und/oder f) mindestens eine zusätzlich Beschichtung aufgebracht wird.

In einer bevorzugten Ausführungsform wird das Trocknen der Beschichtung des Schrittes e) und/oder g) durch Erwärmen auf eine Temperatur zwischen 50 °C und 1.000 °C durchgeführt.

Das Trocknen der in Schritt e) und/oder g) kann durch jedes Verfahren durchgeführt werden, das dem Fachmann bekannt ist. Insbesondere kann die Trocknung in einem Ofen durchgeführt werden. Weiter bevorzugt ist die Trocknung mit einem Heißluftofen, Umluftofen, Mikrowellenofen oder durch Infrarotbestrahlung. Insbesondere kann vorzugsweise die Trocknung mit den Verfahren und den Trocknungszeiten des Schrittes c) durchgeführt werden.

Vorzugsweise wird in Schritt f) auf das Substrat soviel der weiteren Beschichtung aufgebracht wird, dass nach Trocknung in Schritt g) auf dem Substrat eine Schicht der getrockneten weiteren Beschichtung mit einer Schichtdicke von weniger als 1 µm, weiter bevorzugt von 5 bis 600 nm, insbesondere von 10 bis 500 nm und am meisten bevorzugt von 20 bis 400 nm vorhanden ist.

In einer bevorzugten Ausführungsform enthält die Beschichtungsmasse des Schrittes f) ein Verdünnungsmittel. Das Verdünnungsmittel reduziert vorzugsweise die Viskosität der Beschichtungsmasse des Schrittes f) weiter. Das Verdünnungsmittel kann vorzugsweise ausgewählt sein aus aliphatischen Alkoholen, aromatischen Alkoholen, aliphatischen Ketonen, aromatischen Ketonen, aliphatischen Estern, aromatischen Estern, aliphatischen Kohlenwasserstoffen, aromatischen Kohlenwasserstoffen oder Mischungen derselben. Überraschenderweise wird durch das Verdünnungsmitte die Homogenität der aufgebrachten Beschichtung nach Trocknung weiter verbessert.

In einer bevorzugten Ausführungsform ist in der Beschichtungsmasse des Schrittes d) und/oder f) die antimikrobielle und/oder biozide Substanz ausgewählt aus partikulärem Silber, Silbersalzen, komplexiertem Silber, Zink, Zink-Salzen, komplexiertem Zink oder Mischungen derselben.

Das partikuläre Silber in Schritt d) oder f) hat vorzugsweise eine massenmittlere Teilchengröße von 20 nm bis 1000 nm, weiter bevorzugt von 60 nm bis 500 nm und am meisten bevorzugt von 80 nm bis 250 nm.

In einer weiter bevorzugten Ausführungsform kann vor dem Aufbringen der Beschichtung in Schritt b), d) und/oder f) mindestens eine weitere Beschichtung aufgebracht werden. Diese weitere Beschichtung kann z.B. ein Druck sein. Ein solcher Druck kann mit jedem Druckverfahren aufgebracht werden, das dem Fachmann geläufig ist, insbesondere dem Offset-Druckverfahren, Flexo-Druckverfahren, Tampondruck oder Inkjet-Druckverfahren.

In einer weiteren Ausführungsform kann nach dem Aufbringen der Beschichtung in Schritt d) und/oder f) mindestens eine weitere Beschichtung aufgebracht werden. Diese weitere Beschichtung ist nicht begrenzt und kann jede Beschichtung sein, die dem Fachmann bekannt ist. Insbesondere kann diese Beschichtung auch ein Druck sein. Auch in diesem Fall kann der Druck mit jedem Verfahren, das dem Fachmann geläufig ist, aufgebracht werden, insbesondere dem Offset-Druckverfahren, Flexo-Druckverfahren, Tampondruck und Inkjet-Druckverfahren.

Mit dem vorgenannten Verfahren ist ein beschichtetes Substrat erhältlich, welches vorzugsweise eine Tapete ist.

Durch das Verfahren der vorliegenden Erfindung ist es gelungen, ein biozid und/oder antimikrobiell ausgerüstetes Substrat zur Verfügung zu stellen, bei dem die Anzahl an antimikrobieller bzw. biozider .Wirksubstanz verringert ist. Insbesondere ist es durch den spezifischen Aufbau des Substrates gelungen, die antimikrobielle und/oder biozide Substanz auf der Oberflächenschicht zu verankern, wobei flexible Substrate, wie z.B. Tapeten erhältlich sind. Es ist überraschend, das durch den Mehrschichtaufbau der vorliegenden Erfindung flexible Substrate hergestellt werden können, bei denen die aufgebrachte Beschichtung bei Krümmung des Substrates um üblicherweise verwendete Radien keine Beschädigung des Substrates auftritt und insbesondere die biozide und/oder mikrobielle Wirkung des Substrates nicht vermindert wird.

Beschichtete Substrate der vorliegenden Erfindung zeigen überraschenderweise eine sehr hohe Flexibilität. Falls das Substrat flexibel ist, so kann das Substrat gebogen werden, ohne dass die aufgebrachten Beschichtungen zerstört werden oder einreißen. Insbesondere können somit Beschichtungen auf flexiblen Fliesen oder Tapeten aufgebracht werden, die sich, der Oberflächenkontur eines Untergrundes anpassen, ohne dass die Beschichtung nachteilig beeinflusst wird. Als Beschichtung können, wie bereits dargestellt, die unterschiedlichsten Schutzschichten aufgebracht werden, insbesondere Schutzschichten gegenüber aggressiven Chemikalien oder schmutzabweisende Beschichtungen.

Es ist außerdem überraschend, dass das beschichtete Substrat der vorliegenden Erfindung wasch- und scheuerfest (DIN EN 259) ist.

## Patentansprüche

1. Verfahren zur Beschichtung von Substraten, umfassend die Schritte:
a) Bereitstellung eines Substrates,
b) Aufbringung einer Zusammensetzung auf mindestens einer Seite des Substrates, wobei die Zusammensetzung eine anorganische Verbindung,
ausgewählt aus TiO₂, Al₂O₃, SiO₂, ZrO₂, Y₂O₃, BC, SiC, Fe₂O₃, SiN, SiP, Alumosilicaten, Aluminiumphosphaten, Zeolithen,
partiell ausgetauschten Zeolithen oder Mischungen derselben,
enthält,
c) Trocknen der in Schritt b) aufgebrachten Zusammensetzung,
d) Aufbringung mindestens einer Beschichtung auf der mindestens einen Seite des Substrates, auf der in Schritt b) die Zusammensetzung aufgebracht wurde, wobei in der Beschichtung
als Silan
3-Glycidyloxypropyltriethoxysilan und/oder
3-Glycidyloxypropyltrimethoxysilan und/oder
als zweites Silan
3-Aminopropyltrimethoxysilan und/oder
3-Aminopropyltriethoxysilan und/oder
N-2-Aminoethyl-3-aminopropyltrimethoxysilan,
oder
als Silan
Tetraethoxysilan, Methyltriethoxysilan, Octyltriethoxysilan und/oder Hexadecyltrimethoxysilan und/oder
als zweites Silan
3,3,4,4,5,5,6,6,7,7,8,8,8-Tridecafluoroctyltriethoxysilan
enthalten ist,
und
Oxid partikel,
ausgewählt aus den Oxiden von Ti, Si, Zr, Al, Y, Sn, Zn, Ce oder Mischungen derselben,
einen Initiator, und
Zink, Zink-Salze, Zink-Komplexe, Silber, Silber-Salze und/oder komplexiertes Silber
enthält, und
e) Trocknen der in Schritt d) aufgebrachten Beschichtung,
f) Aufbringung mindestens einer weiteren Beschichtung auf der mindestens einen Seite des Substrates, auf der in Schritt d) die Beschichtung aufgebracht wurde, wobei die weitere Beschichtung
als Silan
3-Glycidyloxypropyltriethoxysilan und/oder
3-Glycidyloxypropyltrimethoxysilan und/oder
als zweites Silan
3-Aminopropyltrimethoxysilan und/oder
3-Aminopropyltriethoxysilan und/oder
N-2-Aminoethyl-3-aminopropyltrimethoxysilan,
oder
als Silan
Tetraethoxysilan, Methyltriethoxysilan, Octyltriethoxysilan und/oder Hexadecyltrimethoxysilan und/oder
als zweites Silan
3,3,4,4,5,5,6,6,7,7,8,8,8-Tridecafluoroctyltriethoxysilan,
und
eine antimikrobielle und/oder biozide Substanz, ausgewählt aus Substanzen enthaltend,
Zn, Zn-Salze, Zn-Komplexe wie z.B. Zinkacetylacetonat, Zr, Ag, Ag-Salze, Ag-Komplexe, Sn, Sn-Verbindungen, oder Mischungen derselben, und
einen Initiator enthält,
g) Trocknen der in Schritt f) aufgebrachten weiteren Beschichtung.

2. Das Verfahren gemäß Anspruch 1,
**dadurch gekennzeichnet,**
**dass** das Substrat in Schritt a) ein flexibles und/oder starres Substrat ist.

3. Das Verfahren gemäß mindestens einem der Ansprüche 1 oder 2,
**dadurch gekennzeichnet,**
**dass** das Substrat in Schritt a) bei einer Temperatur größer als 100 °C im Wesentlichen Temperaturstabil ist.

4. Das Verfahren gemäß mindestens einem der Ansprüche 1 bis 3,
**dadurch gekennzeichnet,**
**dass** die Zusammensetzung des Schrittes b) eine Suspension ist, die vorzugsweise eine wässrige Suspension ist.

5. Das Verfahren gemäß mindestens einem der Ansprüche 1 bis 4,
**dadurch gekennzeichnet,**
**dass** anorganische Verbindung des Schrittes b) durch Hydrolisieren einer Vorstufe der anorganischen Verbindung enthaltend das Metall und/oder Halbmetall erhalten wird.

6. Das Verfahren gemäß mindestens einem der Ansprüche 1 bis 5,
**dadurch gekennzeichnet,**
**dass** die Zusammensetzung des Schrittes b) einen Initiator enthält.

7. Das Verfahren gemäß mindestens einem der Ansprüche 1 bis 6,
**dadurch gekennzeichnet,**
**dass** die Zusammensetzung des Schrittes b) ein Sol ist.

8. Das Verfahren gemäß mindestens einem der Ansprüche 1 bis 7,
**dadurch gekennzeichnet,**
**dass** das Trocknen der Zusammensetzung in Schritt c) durch Erwärmen auf eine Temperatur zwischen 50 °C und 1000 °C durchgeführt wird.

9. Das Verfahren gemäß mindestens einem der Ansprüche 1 bis 8,
**dadurch gekennzeichnet,**
**dass** die Oberfläche der Oxid partikel enthalten in der Beschichtung des Schrittes d) und/oder f) hydrophob ist.

10. Das Verfahren gemäß mindestens einem der Ansprüche 1 bis 9,
**dadurch gekennzeichnet,**
**dass** an der Oberfläche der Oxid partikel der Beschichtung des Schrittes d) und/oder f) an Siliziumatome gebundene organische Reste X₁₊₂ₙCₙ vorhanden sind, wobei n 1 bis 20 ist und X Wasserstoff und/oder Fluor ist.

11. Das Verfahren gemäß mindestens einem der Ansprüche 1 bis 10,
**dadurch gekennzeichnet,**
**dass** die Beschichtung des Schrittes d) und/oder f) ein Polymer enthält, welches vorzugsweise ein mittleres massenmittleres Molekulargewicht von mindestens 3000 g/Mol aufweist

12. Das Verfahren gemäß mindestens einem der Ansprüche 1 bis 11,
**dadurch gekennzeichnet,**
**dass** in Schritt d) und/oder f) auf das Substrat soviel der Beschichtung aufgebracht wird, dass nach Trocknung in Schritt e) auf dem Substrat eine Schicht der getrockneten Beschichtung mit einer Schichtdicke von 0,05 bis 10 µm vorhanden ist.

13. Das Verfahren gemäß mindestens einem der Ansprüche 1 bis 12,
**dadurch gekennzeichnet,**
**dass** vor dem Aufbringen der Beschichtung in Schritt b), d), und/oder f) mindestens eine zusätzliche Beschichtung aufgebracht wird.

14. Das Verfahren gemäß mindestens einem der Ansprüche 1 bis 13,
**dadurch gekennzeichnet,**
**dass** nach dem Aufbringen der Beschichtung in Schritt b), d) und/oder f) mindestens eine zusätzliche Beschichtung aufgebracht wird.

15. Das Verfahren gemäß mindestens einem der Ansprüche 1 bis 14,
**dadurch gekennzeichnet,**
**dass** in Schritt f) auf das Substrat soviel der weiteren Beschichtung aufgebracht wird, dass nach Trocknung in Schritt g) auf dem Substrat eine Schicht der getrockneten weiteren Beschichtung mit einer Schichtdicke von weniger als 1 µm, weiter bevorzugt von 5 bis 600 nm, insbesondere von 10 bis 500 nm und am meisten bevorzugt von 20 bis 400 nm vorhanden ist.

16. Das Verfahren gemäß mindestens einem der Ansprüche 1 bis 15,
**dadurch gekennzeichnet,**
**dass** in der Beschichtungsmasse des Schrittes d) und/oder f) die antimikrobielle und/oder biozide Substanz ausgewählt ist aus partikulärem Silber, SilberSalzen, komplexiertem Silber, Zink, Zink-Salzen, komplexiertem Zink oder Mischungen derselben.

17. Ein beschichtetes Substrat, erhältlich nach mindestens einem der Ansprüche 1 bis 16.

18. Das Substrat gemäß Anspruch 17,
**dadurch gekennzeichnet,**
**dass** das beschichtete Substrat eine Tapete ist.

19. Verwendung des beschichteten Substrates gemäß Anspruch 18 als Tapete.

## Claims

1. Method for coating substrates, comprising the steps:
a) provision of a substrate,
b) application of a composition to at least one side of the substrate, the composition containing an inorganic compound
selected from TiO₂, Al₂O₃, SiO₂, ZrO₂, Y₂O₃, BC, SiC, Fe₂O₃, SiN, SiP, aluminosilicates, aluminium phosphates, zeolites, partially exchanged zeolites or mixtures thereof,
c) drying of the composition applied in step b),
d) application of at least one coating to the at least one side of the substrate on which the composition was applied in step b), the coating containing
as a silane
3-glycidyloxypropyltriethoxysilane and/or
3-glycidyloxypropyltrimethoxysilane and/or
as a second silane
3-aminopropyltrimethoxysilane and/or
3-aminopropyltriethoxysilane and/or
N-2-aminoethyl-3-aminopropyltrimethoxysilane,
or
as a silane
tetraethoxysilane, methyltriethoxysilane, octyltriethoxysilane and/or hexadecyltrimethoxysilane and/or
as a second silane
3,3,4,4,5,5,6,6,7,7,8,8,8-tridecafluorooctyltriethoxysilane,
and
oxide particles
which are selected from the oxides of Ti, Si, Zr, Al, Y, Sn, Zn, Ce or mixtures thereof,
an initiator and
zinc, zinc salts, zinc complexes, silver, silver salts and/or complexed silver, and
e) drying of the coating applied in step d),
f) application of at least one further coating to the at least one side of the substrate on which the coating was applied in step d), the further coating containing
as a silane
3-glycidyloxypropyltriethoxysilane and/or
3-glycidyloxypropyltrimethoxysilane and/or
as a second silane
3-aminopropyltrimethoxysilane and/or
3-aminopropyltriethoxysilane and/or
N-2-aminoethyl-3-aminopropyltrimethoxysilane,
or
as a silane
tetraethoxysilane, methyltriethoxysilane, octyltriethoxysilane and/or hexadecyltrimethoxysilane and/or
as a second silane
3,3,4,4,5,5,6,6,7,7,8,8,8-tridecafluorooctyltriethoxysilane,
and
an antimicrobial and/or biocidal substance selected from substances containing
Zn, Zn salts, Zn complexes, such as, for example, zinc acetylacetonate, Zr, Ag, Ag salts, Ag complexes, Sn, Sn compounds or mixtures thereof, and
an initiator, and
g) drying of the further coating applied in step f).

2. Method according to Claim 1, **characterized in that** the substrate in step a) is a flexible and/or rigid substrate.

3. Method according to at least one of Claims 1 and 2, **characterized in that** the substrate in step a) is substantially thermally stable at a temperature greater than 100°C.

4. Method according to at least one of Claims 1 to 3, **characterized in that** the composition of step b) is a suspension which is preferably an aqueous suspension.

5. Method according to at least one of Claims 1 to 4, **characterized in that** the inorganic compound of step b) is obtained by hydrolysing a precursor of the inorganic compound containing the metal and/or semi-metal.

6. Method according to at least one of Claims 1 to 5, **characterized in that** the composition of step b) contains an initiator.

7. Method according to at least one of Claims 1 to 6, **characterized in that** the composition of step b) is a sol.

8. Method according to at least one of Claims 1 to 7, **characterized in that** the drying of the composition in step c) is carried out by heating to a temperature of from 50°C to 1000°C.

9. Method according to at least one of Claims 1 to 8, **characterized in that** the surface of the oxide particles present in the coating of step d) and/or f) is hydrophobic.

10. Method according to at least one of Claims 1 to 9, **characterized in that** organic radicals X₁₊₂ₙCₙ bonded to silicon atoms, where n is from 1 to 20 and X is hydrogen or fluorine, are present on the surface of the oxide particles of the coating of step d) and/or f).

11. Method according to at least one of Claims 1 to 10, **characterized in that** the coating of step d) and/or f) contains a polymer which preferably has an average mass average molecular weight of at least 3000 g/mol.

12. Method according to at least one of Claims 1 to 11, **characterized in that**, in step d) and/or f), the coating is applied to the substrate in an amount such that, after drying in step e), a layer of the dried coating having a layer thickness of from 0.05 to 10 µm is present on the substrate.

13. Method according to at least one of Claims 1 to 12, **characterized in that** at least one additional coating is applied before the application of the coating in step b), d) and/or f).

14. Method according to at least one of Claims 1 to 13, **characterized in that** at least one additional coating is applied after the application of the coating in step b), d) and/or f).

15. Method according to at least one of Claims 1 to 14, **characterized in that**, in step f), the further coating is applied to the substrate in an amount such that, after drying in step g), a layer of the dried further coating having a layer thickness of less than 1 µm, more preferably from 5 to 600 nm, in particular from 10 to 500 nm and most preferably from 20 to 400 nm is present on the substrate.

16. Method according to at least one of Claims 1 to 15, **characterized in that**, in the coating material of step d) and/or f), the antimicrobial and/or biocidal substance is selected from particulate silver, silver salts, complexed silver, zinc, zinc salts, complexed zinc or mixtures thereof.

17. Coated substrate obtainable according to at least one of Claims 1 to 16.

18. Substrate according to Claim 17, **characterized in that** the coated substrate is a wallpaper.

19. Use of the coated substrate according to Claim 18 as wallpaper.

## Revendications

1. Procédé pour l'enduction de substrats, comprenant les étapes :
a) fourniture d'un substrat,
b) application d'une composition sur au moins une face du substrat, la composition contenant un composé inorganique,
choisi parmi TiO₂, Al₂O₃, SiO₂, ZrO₂, Y₂O₃, BC, SiC, Fe₂O₃, SiN, SiP, des aluminosilicates, des phosphates d'aluminium, des zéolithes,
des zéolithes partiellement échangées ou des mélanges de ceux-ci,
c) séchage de la composition appliquée dans l'étape b),
d) application d'au moins un revêtement sur ladite au moins une face du substrat, sur laquelle la composition a été appliquée dans l'étape b), dans le revêtement étant contenus
en tant que silane
du 3-glycidyloxypropyltriéthoxysilane et/ou
du 3-glycidyloxypropyltriméthoxysilane et/ou
en tant que deuxième silane
du 3-aminopropyltriméthoxysilane et/ou
du 3-aminopropyltriéthoxysilane et/ou du N-2-aminoéthyl-3-aminopropyltriméthoxysilane,
ou
en tant que silane
du tétraéthoxysilane, du méthyltriéthoxysilane, de l'octyltriéthoxysilane et/ou de l'hexadécyltriméthoxysilane et/ou
en tant que deuxième silane
du 3,3,4,4,5,5,6,6,7,7,8,8,8-tridécafluoro-octyltriéthoxysilane,
et contenant
des particules d'oxyde
choisi parmi les oxydes de Ti, Si, Zr, Al, Y, Sn, Zn, Ce ou des mélanges de ceux-ci,
un amorceur, et
du zinc, des sels de zinc, des complexes de zinc, de l'argent, des sels d'argent et/ou de l'argent complexé, et
e) séchage du revêtement appliqué dans l'étape d),
f) application d'au moins un autre revêtement sur ladite au moins une face du substrat sur laquelle le revêtement a été appliqué dans l'étape d), l'autre revêtement contenant
en tant que silane
du 3-glycidyloxypropyltriéthoxysilane et/ou
du 3-glycidyloxypropyltriméthoxysilane et/ou
en tant que deuxième silane
du 3-aminopropyltriméthoxysilane et/ou
du 3-aminopropyltriéthoxysilane et/ou du N-2-aminoéthyl-3-aminopropyltriméthoxysilane,
ou
en tant que silane
du tétraéthoxysilane, du méthyltriéthoxysilane, de l'octyltriéthoxysilane et/ou de l'hexadécyltriméthoxysilane et/ou
en tant que deuxième silane
du 3,3,4,4,5,5,6,6,7,7,8,8,8-tridécafluoro-octyltriéthoxysilane,
et
une substance antimicrobienne et/ou biocide, choisi parmi des substances contenant
Zn, des sels de Zn, des complexes de Zn, comme par exemple l'acétylacétonate de zinc, Zr, Ag, des sels d'Ag, des complexes d'Ag, Sn, des composés de Sn, ou des mélanges de ceux-ci, et
un amorceur,
g) séchage de l'autre revêtement appliqué dans l'étape f).

2. Procédé selon la revendication 1, **caractérisé en ce que** le substrat dans l'étape a) est un substrat souple et/ou un substrat rigide.

3. Procédé selon au moins l'une des revendications 1 ou 2, **caractérisé en ce que** le substrat dans l'étape a) est essentiellement thermiquement stable à une température supérieure à 100 °C.

4. Procédé selon au moins l'une des revendications 1 à 3, **caractérisé en ce que** la composition de l'étape b) est une suspension, qui est de préférence une suspension aqueuse.

5. Procédé selon au moins l'une des revendications 1 à 4, **caractérisé en ce que** le composé inorganique de l'étape b) est obtenu par hydrolyse d'un précurseur du composé inorganique contenant le métal et/ou métalloïde.

6. Procédé selon au moins l'une des revendications 1 à 5, **caractérisé en ce que** la composition de l'étape b) contient un amorceur.

7. Procédé selon au moins l'une des revendications 1 à 6, **caractérisé en ce que** la composition de l'étape b), est un sol.

8. Procédé selon au moins l'une des revendications 1 à 7, **caractérisé en ce que** le séchage de la composition dans l'étape c) est effectué par chauffage à une température comprise entre 50 °C et 1 000 °C.

9. Procédé selon au moins l'une des revendications 1 à 8 **caractérisé en ce que** la surface des particules d'oxyde contenues dans le revêtement de l'étape d) et/ou de l'étape f) est hydrophobe.

10. Procédé selon au moins l'une des revendications 1 à 9 **caractérisé en ce que** sur la surface des particules d'oxyde du revêtement de l'étape d) et/ou de l'étape f) sont présents des radicaux organiques X₁₊₂ₙCₙ liés à des atomes de silicium, n allant de 1 à 20 et X étant un atome d'hydrogène et/ou de fluor.

11. Procédé selon au moins l'une des revendications 1 à 10, **caractérisé en ce que** le revêtement de l'étape d) et/ou de l'étape f) contient un polymère qui présente de préférence une masse moléculaire moyenne en poids d'au moins 3 000 g/mole.

12. Procédé selon au moins l'une des revendications 1 à 11, **caractérisé en ce que** dans l'étape d) et/ou l'étape f) est appliquée sur le substrat une quantité suffisante du revêtement pour qu'après le séchage dans l'étape e) soit présente sur le substrat une couche du revêtement séché ayant une épaisseur de couche de 0,05 à 10 µm.

13. Procédé selon au moins l'une des revendications 1 à 12, **caractérisé en ce qu'**au moins un revêtement supplémentaire est appliqué avant l'application du revêtement dans l'étape b), d) et/ou f).

14. Procédé selon au moins l'une des revendications 1 à 13, **caractérisé en ce qu'**au moins un revêtement supplémentaire est appliqué après l'application du revêtement dans l'étape b), d) et/ou f).

15. Procédé selon au moins l'une des revendications 1 à 14, **caractérisé en ce que** dans l'étape f) est appliquée sur le substrat une quantité telle de l'autre revêtement pour qu'après le séchage dans l'étape g) soit présente sur le substrat une couche de l'autre revêtement séché ayant une épaisseur de couche de moins 1 µm, de préférence de 5 à 600 nm, en particulier de 10 à 500 nm et de façon particulièrement préférée de 20 à 400 nm.

16. Procédé selon au moins l'une des revendications 1 à 15, **caractérisé en ce que** la substance antimicrobienne et/ou biocide dans la matière de revêtement de l'étape d) et/ou de l'étape f) est choisie parmi l'argent particulaire, les sels d'argent, l'argent complexé, le zinc, les sels de zinc, le zinc complexé ou des mélanges de ceux-ci.

17. Substrat revêtu, pouvant être obtenu selon au moins l'une des revendications 1 à 16.

18. Substrat selon la revendication 17, **caractérisé en ce que** le substrat revêtu est un papier peint.

19. Utilisation du substrat revêtu selon la revendication 18, en tant que papier peint.
